# EUROPÄISCHE PATENTSCHRIFT

(11) **EP 1 703 183 B1**
(45) Veröffentlichungstag und Bekanntmachung des Hinweises auf die Patenterteilung: **11.07.2007**
(21) Anmeldenummer: 05005981.5
(22) Anmeldetag: 18.03.2005
(51) Int. Cl.: F16K 15/14, F02M 25/08

(54) **Rückschlagventil**
Check valve
Clapet anti-retour

(43) Veröffentlichungstag der Anmeldung: 20.09.2006
(73) Patentinhaber: Carl Freudenberg KG, 69469 Weinheim (DE)
(72) Erfinder: Bittner, Jörg, 69514 Laudenbach (DE); Engel, Jürgen, 64407 Fränkisch-Crumbach (DE); Daume, Volker, 69434 Hirschhorn (DE)

(56) Entgegenhaltungen:
- EP-A- 0 582 038
- EP-A- 0 612 537
- EP-A- 0 638 328
- DE-C1- 4 439 881
- US-A- 5 025 829
- US-A- 5 809 977
- US-A1- 2003 188 790

## Beschreibung

### Technisches Gebiet

Die Erfindung betrifft ein Rückschlagventil nach dem Oberbegriff des Patentanspruchs 1. Die Erfindung betrifft des Weiteren eine Anordnung, welche ein Rückschlagventil und ein Regenerierventil umfasst.

### Stand der Technik

Rückschlagventile der eingangs genannten Art sind aus dem Stand der Technik bereits bekannt. Diese sind häufig als Stopfen ausgestaltet, welchen auslassseitig eine Membran zugeordnet ist. Diese Stopfen sind als Einheit in eine nachgeordnete Anordnung einsetzbar. Bei dieser Ausgestaltung ist nachteilig, dass die Membran nach außen nahezu ungeschützt an der Auslassseite angeordnet ist. Insoweit ist die Membran Verschmutzungen und Beschädigungen schutzlos ausgesetzt, wenn das Rückschlagventil als Einzelteil transportiert oder montiert wird. Durch mechanische Beschädigungen oder Verunreinigungen der Membran ist deren einwandfreie Einsatzfähigkeit nicht mehr gewährleistet. Des Weiteren ist bei der Montage sicher zu stellen, dass die Membran korrekt im Gesamtsystem positioniert ist, um eine ausreichende Dichtheit desselben zu gewährleisten. Daher ist die Montage der bekannten Rückschlagventile ein äußerst aufwendiger Prozess.

Aus der ZIP 0 638 328 A1 ist ein Rückschlagventil bekannt, bei dem ein Stutzen mit säulenförmigen Nasen ausgestaltet ist. Die säulenförmigen Nasen dienen als Anschläge für die Membran.

### Darstellung der Erfindung

Der Erfindung liegt daher die Aufgabe zugrunde, ein System mit einem Rückschlagventil zu schaffen, welches bei konstruktiv einfachem Aufbau eine Membran ausbildet, die unsymmetrisch aufklappbar ist.

Erfindungsgemäß wird die voranstehende Aufgabe mit den Merkmalen des Patentanspruchs 1 gelöst.

In erfindungsgemäßer Weise ist zunächst erkannt worden, dass das gattungsbildende Rückschlagventil im Hinblick auf seine Verwendung in der Praxis erhebliche Nachteile aufweist. Des Weiteren ist erkannt worden, dass diese Nachteile damit zusammenhängen, dass die Membran frei zugänglich an der Auslassseite angeordnet ist Schließlich ist erkannt worden, dass die Membran in aufwendiger Weise positioniert werden muss, um eine Dichtheit des Gesamtsystems zu realisieren. Auf raffinierte Weise sind diese Nachteile des Standes der Technik dadurch überkommen worden, dass die Membran zwischen zwei geeignet komplementär ausgebildeten Teilen stets korrekt positioniert ist. Des Weiteren ist realisiert, dass die Teile einen Schutz der Membran bewerkstelligen, da sie diese zwischen sich einschließen und gegen Einflüsse der Umwelt abschirmen. Insoweit sind Beeinträchtigungen der Membran durch Verschmutzungen oder mechanische Beschädigungen nahezu ausgeschlossen. Folglich ist ein System mit einem Rückschlagventil angegeben, welches eine einwandfreie Funktionsfähigkeit bei einfachem konstruktivem Aufbau und problemloser Montage gewährleistet.

Die Membran umfasst einen Kreisring, der einen inneren Kreis umgibt und mit dem Kreisring durch einen Steg verbunden ist. Diese konkrete Ausgestaltung erlaubt die Anlage des Kreisrings an den Stutzen, wodurch die Membran örtlich fixiert wird und wodurch die Membran an einer dem Stutzen zugeordneten Dichtkontur anlegbar ist. Die Vorkehrung eines inneren Kreises erlaubt die Realisierung eines kreisförmigen Kanals, der durch die Membran freigebbar ist. Der Steg fungiert als Gelenk, welches das Aufklappen des inneren Kreises in Strömungsrichtung realisiert.

Die Membran ist durch geeignete Dickenverteilung des Steges unsymmetrisch aufklappbar. Beispielsweise ist denkbar, dass der Steg an einer Seite dicker als an einer anderen Seite ist und insoweit die Membran an einer Seite stärker am Aufklappen hindert als an einer anderen. Dies bewirkt ein verkipptes Aufklappen der Membran. Vor diesem Hintergund ist denkbar, dass die Dickenverteilung des Steges bzw. die Gesamtdicke des Steges auf die Drücke abgestimmt wird, bei denen das Rückschlagventil ansprechen soll. Bei der Verwendung des Rückschlagventils im Ansaugtrakt eines Motors oder in einem Regenerierventil können erhebliche Drücke auftreten. Die Dicke des Steges ist auf diese Drücke abstimmbar.

Insoweit ist die eingangs genannte Aufgabe gelöst.

In besonders vorteilhafter Weise könnten die Stutzen und die Membran zerstörungsfrei miteinander verbunden sein. Hierdurch ist realisierbar, dass eine Membran problemlos austauschbar ist. Dabei ist denkbar, dass die Stutzen miteinander verschraubt, aufeinander gesteckt oder über einen Bajonettverschluss verbunden sind.

Eine nicht zerstörungsfreie Verbindung könnte durch Verkleben der Stutzen oder durch Ultraschallverschweißen der Stutzen erfolgen. Diese Form der Verbindung gewährleistet eine besondere Dichtheit an den Verbindungstellen.

Einem Stutzen könnte der Einlass und dem anderen der Auslass zugeordnet sein, wobei der Einlass, der Auslass und der Kanal koaxial und kolinear angeordnet sind. Durch eine solche konstruktive Ausgestaltung des Rückschlagventils sind hohe Strömungsgeschwindigkeiten des das Rückschlagventil durchfließenden Strömungsmediums realisierbar, da das Strömungsmedium nicht umgelenkt wird. Vorteilhaft ist auch, dass das Vorhandensein der Membran durch Sichtkontrolle problemlos überprüfbar ist. Des Weiteren ermöglicht diese konkrete Ausgestaltung eines Rückschlagventils eine einfache Reinigung des Kanals durch einen geraden Gegenstand wie einen Stab oder Stift.

Die Stutzen könnten einen zylindrischen Abschnitt zur Aufnahme einer Schlauchverbindung und einen Verbindungsabschnitt zur Verbindung mit einem anderen Stutzen aufweisen. Der zylindrische Abschnitt könnte profiliert ausgestaltet sein. Diese konkrete Ausgestaltung ermöglicht die Positionierung des Rückschlagventils in einer Schlauchleitung. Dabei ist denkbar, dass der Schlauch mittels einer Schlauchklemme sowohl am Auslass als auch am Einlass fest verbunden wird. Des Weiteren ist denkbar, dass der Auslass oder der Einlass einem Schlauch zugeordnet wird, wobei der Verbindungsabschnitt des Stutzens einer nachgeordneten Anordnung zugeordnet wird. Insoweit ist eine modulare Verwendung der einzelnen Stutzen realisierbar, wodurch das Rückschlagventil in unterschiedlichsten Einbausituationen Anwendung finden kann. Denkbar ist auch, den Stutzen nicht nur mit Schlauchleitungen sondern auch mit anderen Leitungen zu verbinden.

Ein Stutzen könnte im Verbindungsabschnitt einen Anschlag zur Anlage der Membran aufweisen. Hierdurch ist realisierbar, dass die Membran einerseits in ihrer Position relativ zu den Stutzen fixierbar ist und andererseits im Hinblick auf ihr Aufklappverhalten innerhalb des Kanals einstellbar ist. Vor diesem Hintergrund ist beispielsweise denkbar, dass der Anschlag sich als axial erstreckender Stift ausgebildet ist, welcher durch seine Positionierung festlegt, wie weit die Membran in Strömungsrichtung aufklappbar ist. Je weiter der Stift von der Membran in geschlossenem Zustand entfernt ist, desto weiter kann die Membran aufgeklappt werden. Verzichtet man vollständig auf einen Stift so lässt sich die Membran parallel zur Achse des Kanals orientieren.

Die Membran könnte derart angeordnet und/oder ausgebildet sein, dass sie einen kreisförmigen Kanal freigibt. Durch diese Ausgestaltung ist realisierbar, dass eine große Menge an Strömungsmedium die Membran passieren kann. Durch die Ausgestaltung eines kreisförmigen Kanals sind Verstopfungen nahezu ausgeschlossen, da Schwebeteilchen und Verunreinigungen eine kreisförmige Fläche problemlos passieren können.

Der Kreisring könnte als Dichtring fungieren. Hierdurch ist realisierbar, dass die Membran zwei Räume gegeneinander oder einen Raum gegen die Atmosphäre abdichtet und das Strömungsmedium nur in Aufklapprichtung der Membran vom einen in den anderen Raum gelangen kann.

Vor diesem Hintergrund ist denkbar, dass der Kreisring im Querschnitt X-förmig ausgebildet ist. Des weiteren ist denkbar, dass der Kreisring im Querschnitt rechteckig ausgebildet ist oder als O-Ring ausgebildet ist. Ganz in Abhängigkeit von der Ausbildung der Stutzen, weiche komplementär zur Form des Kreisrings ausgebildet sind, ist eine Form des Kreisrings wählbar, welche eine sichere Fixierung der Membran bei maximaler Dichtigkeit realisiert. Hierbei stellt ein X-förmig ausgebildeter Kreisring eine besonders vorteilhafte Lösung dar, da die X-förmige Ausgestaltung eine Bewegung der Membran in axialer Richtung nahezu ausschließt. Dies hat seinen Grund darin, dass in den Stutzen ausgeformte Ausstülpungen in die Schenkel des X eingreifen können.

Der innere Kreis der Membran könnte mit dem Kreisring durch Laschen wirkverbunden sein. Hierdurch ist realisierbar, dass das Aufklappverhalten des inneren Kreises beeinflussbar ist. Beispielsweise ist denkbar, dass die Laschen in ihrer Länge derart bemessen sind, dass sie nur einen bestimmten Öffnungswinkel des inneren Kreises zulassen.

Die Membran könnte einen Kreis und einen mit diesem verbundenen Steg zur Anlage an einem Halteelement umfassen. Diese konkrete Ausgestaltung erlaubt eine einfache Fertigung der Membran wobei der Steg als Gelenk fungiert, welches das Aufklappen der Membran ermöglicht. Dabei ist denkbar, dass der Steg einen Durchgang aufweist, der beispielsweise auf einem Stift am Stutzen aufsteckbar ist. Zur Sicherung der Membran könnte auf diesen Stift ein Element aufgeschraubt, aufgeklebt oder aufgeschweißt werden, welches die Membran am Stutzen fixiert. Denkbar ist auch, dass an beiden Stutzen jeweils ein Stift vorgesehen ist, welche im Zusammenspiel die Membran am Durchgang des Steges fixieren. Des Weiteren könnte eine Fixierung vorgesehen sein, welche eine Schwenkbewegung des Kreises um die Stiftachse verhindert und als Verdrehsicherung fungiert.

Vor diesem Hintergrund könnte die Dicke des Steges zur Einstellung der Rückstellkraft des ausgelenkten Kreises ausgebildet sein. Diese Ausgestaltung ist dahingehend vorteilhaft, dass auf Federelemente oder andere die Rückstellung der Membran bewirkende Elemente weitgehend verzichtet werden kann. Durch die konkrete Ausgestaltung ist ein besonders kompakter und teilearmer Aufbau des Rückschlagventils realisierbar. Letztlich kann das gesamte Rückschlagventil aus drei Teilen bestehen, nämlich einem ersten und einem zweiten Stutzen sowie einer speziell ausgeformten Membran.

Die Membran könnte aus Fluorsilikon gefertigt sein. Dieses konkrete Ausgestaltung realisiert eine Elastizität der Membran bei tiefen Temperaturen. Insoweit ist das Rückschlagventil auch an extreme Anforderungen anpassbar und kann beispielsweise in Kraftfahrzeugen und Motoren Verwendung finden.

Die Membran könnte gewebeverstärkt ausgebildet sein, um eine besondere Steifigkeit aufzuweisen. Vor diesem Hintergrund ist denkbar, dass nicht nur die Membran gewebeverstärkt ausgebildet ist, sondern die Stutzen aus glasfasergefülltem Kunststoff, insbesondere Polyamid 6.6, gefertigt sind. Diese konkrete Ausgestaltung des Rückschlagventils gewährleistet eine hohe Gebrauchstauglichkeit des Rückschlagventils im Hinblick auf dessen Verwendung in Kraftfahrzeugen.

Die Membran könnte eine Antihaftbeschichtung aufweisen. Hierdurch ist realisierbar, dass nahezu keine Schwebe- oder Schmutzteilchen im Strömungsmedium an der Membran haften bleiben und insoweit zu Verstopfungen führen. Vorteilhaft ist auch, dass die Membran nicht am Stutzenmaterial anhaftet und daher ein reproduzierbares und definiertes Öffnungsverhalten zeigt.

Einem Stutzen könnte ein Regenerierventil zugeordnet sein. Dies erlaubt die Verwendung des Rückschlagventils in einem System zur Zufuhr von Kohlenwasserstoffen aus Tankgasen zu einem Kraftfahrzeugmotor. Das Regenerierventil dosiert die Zugabe von Kohlenwasserstoffen, welche in einem Aktivkohlefilter aus Tankgasen herausgefiltert wurden.

Vor diesem Hintergrund könnte der Stutzen in das Regenerierventil integriert sein, um einen besonders kompakten Aufbau zu realisieren, Insoweit ist eine einstückige Ausgestaltung des Regenerierventils mit einem ersten Stutzen realisiert, an welchen ein zweiter Stutzen mit Membran problemlos anfügbar ist. Dieser Aufbau ermöglicht die Schaffung eines Regenerierventils mit integriertem Rückschlagventil aus drei vorgefertigten Einzelteilen, wobei die Membran als einzige Dichtung zwischen den Stutzen fungiert.

Das Regenerierventil könnte einen ersten Einlass aufweisen, welcher mit einem zweiten Einlass durch eine Motorsteuerung strömungsverbindbar ist. Dies ermöglicht eine gepulste Zufuhr von Strömungsmedien zu einer dem Rückschlagventil nachgeordneten Einrichtung, insbesondere einem Motor eines Kraftfahrzeugs.

Des Weiteren ist die eingangs genannte Aufgabe durch eine Anordnung mit den Merkmalen des Patentanspruchs 25 gelöst. Um Wiederholungen zu vermeiden, sei in Bezug auf die erfinderische Tätigkeit auf die Ausführungen zum Rückschlagventil verwiesen.

Es gibt nun verschiedene Möglichkeiten, die Lehre der vorliegenden Erfindung auf vorteilhafte Weise auszugestalten und weiterzubilden. Dazu ist einerseits auf die dem Patentanspruch 1 nachgeordneten Ansprüche, andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: das erfindungsgemäße Rückschlagventil in einer schematischen Schnittansicht,
- Fig. 2: die im Rückschlagventil gemäß Fig. 1 verwendete Membran,
- Fig. 3: eine Membran, welche Laschen aufweist, und
- Fig. 4: ein Rückschlagventil, welchem ein Regenerierventil zugeordnet ist.

### Ausführung der Erfindung

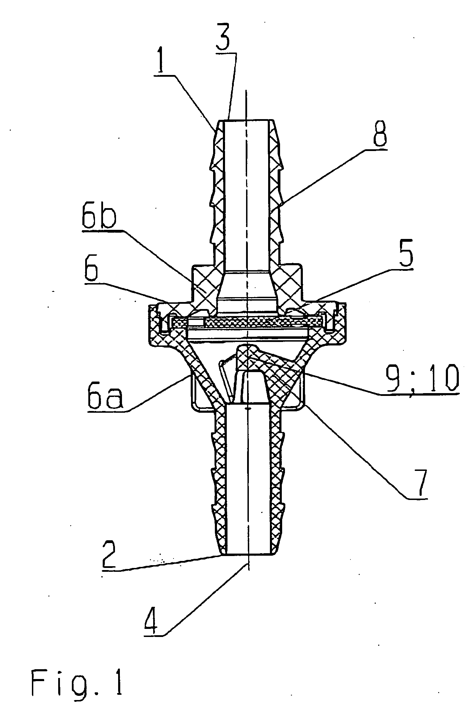

Fig. 1 zeigt in einer schematischen Schnittansicht das erfindungsgemäße Rückschlagventil. Dieses umfasst einen Grundkörper 1 mit einem Einlass 3 und einem Auslass 2, die durch einen Kanal 4 miteinander strömungsverbindbar sind. Im Kanal 4 ist eine Membran 5 derart angeordnet, dass sie den Kanal 4 ausschließlich in einer Strömungsrichtung freigibt. Der Grundkörper 1 besteht aus zwei im Verbindungsbereich 6 komplementär zueinander ausgebildeten Stutzen 7 und 8, weiche die Membran 5 als drittes Teil zwischen sich einschließen.

Die Stutzen 7 und 8 sowie die Membran 5 sind zerstörungsfrei lösbar miteinander verbunden. Dem Stutzen 7 ist der Auslass 2 und dem Stutzen 8 der Einlass 3 zugeordnet. Der Einlass 3, der Auslass 2 sowie der Kanal 4 sind koaxial und kolinear angeordnet.

Die Stutzen 7, 8 weisen einen zylindrischen Abschnitt zur Aufnahme einer Schlauchverbindung und einen Verbindungsabschnitt 6a, 6b zur Verbindung mit einem anderen Stutzen auf. Die zylindrischen Abschnitte zur Aufnahme einer Schlauchverbindung weisen umfänglich kegelstumpfartige Strukturen auf.

Der Stutzen 7 weist im Verbindungsabschnitt 6 einen Anschlag 9 auf, der als sich axial erstreckender Stift 10 ausgebildet ist. Die Membran 5 ist derart ausgebildet, dass sie einen kreisförmigen Kanal 4 freigibt.

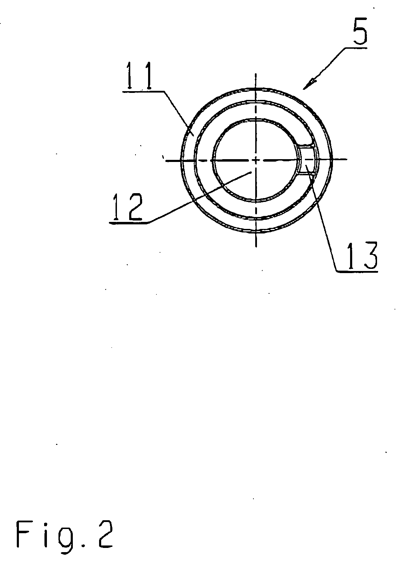

Fig. 2 zeigt eine Ausführungsform der Membran 5. Die Membran 5 umfasst einen Kreisring 11, der einen inneren Kreis 12 umgibt und mit dem Kreisring 12 durch einen Steg 13 verbunden ist.

Der Kreisring 11 fungiert als Dichtung und Positionierungselement. Der Kreisring 11 ist im Querschnitt rechteckig ausgebildet. Die Dicke und Form des Steges 13 ist zur Einstellung der Rückstellkraft des ausgelenkten Kreises 12 ausgebildet.

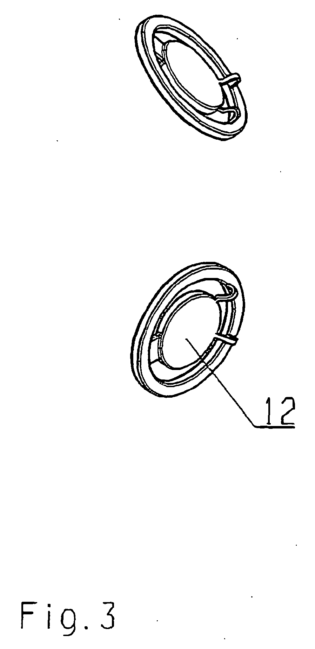

Fig. 3 zeigt eine Membran, welcher Laschen zur Realisierung einer definierten Auslenkung des Kreises 12 zugeordnet sind.

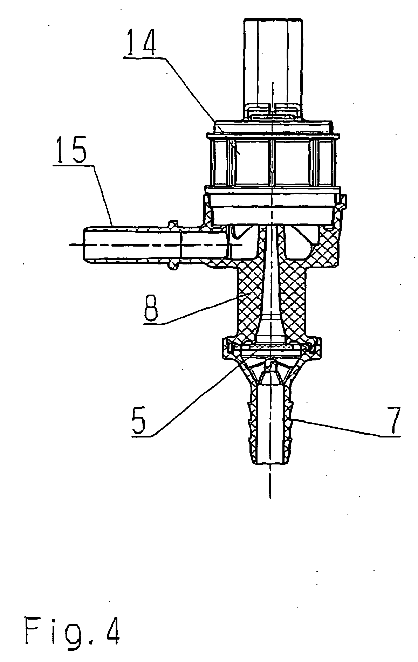

Fig. 4 zeigt einen Grundkörper 1 mit einem Stutzen 8, welcher in ein Regenerierventil 14 integriert ist. An den Stutzen 8 schließt sich der Stutzen 7 mit Membran 5 an. Das Regenerierventil 14 weist einen Regenerierventil-Einlass 15 auf, der mit einem nicht gezeigten Aktivkohlefilter verbindbar ist. Dieser filtert Kohlenwasserstoffe aus Gasen heraus, welche sich im Tank eines Kraftfahrzeugs befinden. Das Regenerierventil 14 erlaubt die definierte Zufuhr von Kohlenwasserstoffen aus dem Aktivkohlefilter zum Motor des Kraftfahrzeugs. Die Kohlenwasserstoffe strömen durch den Regenerierventil-Einlass 15 zum Stutzen 7. Der Stutzen 7 ist mit einem Saugrohr verbindbar. Das Regenerierventil 14 kann durch eine Motorsteuerung angesteuert werden und elektromagnetisch arbeiten.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen. Abschließend sei ganz besonders hervorgehoben, dass die zuvor rein willkürlich gewählten Ausführungsbeispiele lediglich zur Erörterung der erfindungsgemäßen Lehre dienen, diese jedoch nicht auf diese Ausführungsbeispiele einschränken.

## Patentansprüche

1. Rückschlagventil, umfassend einen Grundkörper (1) mit einem Einlass (3) und einem Auslass (2), die durch einen Kanal (4) miteinander strömungsverbindbar sind, wobei im Kanal (4) eine Membran (5) derart angeordnet ist, dass sie den Kanal (4) ausschließlich in einer Strömungsrichtung freigibt, wobei der Grundkörper (1) aus zwei im Verbindungsbereich (6) komplementär zueinander ausgebildeten Stutzen (7, 8) besteht, welche die Membran (5) als drittes Teil zwischen sich einschließen, und wobei die Membran (5) einen Kreisring (11) umfasst, der einen inneren Kreis (12) umgibt und mit dem Kreisring (11) durch einen Steg (13) verbunden ist, **dadurch gekennzeichnet, dass** die Membran (5) durch geeignete Dickenverteilung des Steges (13) unsymmetrisch aufklappbar ist.

2. Rückschlagventil nach Anspruch 1, **dadurch gekennzeichnet, dass** die Stutzen (7, 8) und die Membran (5) zerstörungsfrei lösbar miteinander verbunden sind.

3. Rückschlagventil nach Anspruch 1, **dadurch gekennzeichnet, dass** die Stutzen (7, 8) und die Membran (5) fest miteinander verbunden sind.

4. Rückschlagventil nach einem der Ansprüche 1 bis 3, **dadurch gekennzeichnet, dass** einem Stutzen (7) der Auslass (2) und dem anderen der Einlass (3) zugeordnet ist und der Einlass (3), der Auslass (2) und der Kanal (4) koaxial und kolinear angeordnet sind.

5. Rückschlagventil nach einem der Ansprüche 1 bis 4, **dadurch gekennzeichnet, dass** mindestens ein Stutzen (7, 8) einen zylindrischen Abschnitt zur Aufnahme einer Schlauchverbindung und einen Verbindungsabschnitt (6a, 6b) zur Verbindung mit einem anderen Stutzen (7, 8) aufweist.

6. Rückschlagventil nach einem der Ansprüche 1 bis 5, **dadurch gekennzeichnet, dass** mindestens ein Stutzen (7) im Verbindungsabschnitt einen Anschlag (9) zur Anlage der Membran (5) aufweist.

7. Rückschlagventil nach Anspruch 6, **dadurch gekennzeichnet, dass** der Anschlag (9) als sich axial erstreckender Stift (10) ausgebildet ist.

8. Rückschlagventil nach einem der Ansprüche 1 bis 7, **dadurch gekennzeichnet, dass** die Membran (5) derart angeordnet und/ oder ausgebildet ist, dass sie einen kreisförmigen Kanal (4) freigibt.

9. Rückschlagventil nach einem der Ansprüche 1 bis 8, **dadurch gekennzeichnet, dass** der Kreisring (11) als Dichtring fungiert.

10. Rückschlagventil nach Anspruch 9, **dadurch gekennzeichnet, dass** der Kreisring (11) als Positionierungselement fungiert.

11. Rückschlagventil nach einem der Ansprüche 1 bis 10, **dadurch gekennzeichnet, dass** der Kreisring (11) im Querschnitt X-förmig ausgebildet ist.

12. Rückschlagventil nach einem der Ansprüche 1 bis 10, **dadurch gekennzeichnet, dass** der Kreisring (11) im Querschnitt rechteckig ausgebildet ist.

13. Rückschlagventil nach einem der Ansprüche 1 bis 10, **dadurch gekennzeichnet, dass** der Kreisring (11) als O-Ring ausgebildet ist.

14. Rückschlagventil nach einem der Ansprüche 1 bis 13, **dadurch gekennzeichnet, dass** der innere Kreis (12) mit dem Kreisring (11) durch Laschen wirkverbunden ist.

15. Rückschlagventil nach einem der Ansprüche 1 bis 14, **dadurch gekennzeichnet, dass** die Dicke des Steges (13) zur Einstellung der Rückstellkraft des ausgelenkten Kreises (12) ausgebildet ist.

16. Rückschlagventil nach einem der Ansprüche 1 bis 15, **dadurch gekennzeichnet, dass** die Membran (5) aus Fluorsilikon gefertigt ist.

17. Rückschlagventil nach einem der Ansprüche 1 bis 16, **dadurch gekennzeichnet, dass** die Membran (5) gewebeverstärkt ausgebildet ist.

18. Rückschlagventil nach einem der Ansprüche 1 bis 17, **dadurch gekennzeichnet, dass** die Membran (5) eine Antihaftbeschichtung aufweist.

19. Rückschlagventil nach einem der Ansprüche 1 bis 18, **dadurch gekennzeichnet, dass** dem Stutzen (8) ein Regenerierventil (14) zugeordnet ist.

20. Rückschlagventil nach Anspruch 19, **dadurch gekennzeichnet, dass** der Stutzen (8) in das Regenerierventil (14) integriert ist.

21. Rückschlagventil nach Anspruch 20, **dadurch gekennzeichnet, dass** das Regenerierventil (14) einen Regenerierventil-Einlass (15) aufweist, welcher mit dem Einlass (3) durch eine Motorsteuerung strömungsverbindbar ist.

22. Anordnung mit einem Regenerierventil und einem Rückschlagventil nach einem der Ansprüche 1 bis 21.

## Claims

1. Check valve, comprising a basic body (1) with an inlet (3) and an outlet (2) which can be connected in terms of flow to each other by a passage (4), wherein a membrane (5) is arranged in the passage (4) in such a manner that it only opens up the passage (4) in a flow direction, wherein the basic body (1) comprises two connecting pieces (7, 8) which are of complementary design to each other in the connecting region (6) and enclose the membrane (5), as a third part, between them, and wherein the membrane (5) comprises a circular ring (11), which surrounds an inner circle (12), and is connected to the circular ring (11) by a web (13), **characterized in that** the membrane (5) can be opened asymmetrically by means of suitable distribution of the thickness of the web (13).

2. Check valve according to Claim 1, **characterized in that** the connecting pieces (7, 8) and the membrane (5) are connected to each other in a manner such that they can be detached without being destroyed.

3. Check valve according to Claim 1, **characterized in that** the connecting pieces (7, 8) and the membrane (5) are connected fixedly to each other.

4. Check valve according to one of Claims 1 to 3, **characterized in that** one connecting piece (7) is assigned the outlet (2) and the other is assigned the inlet (3), and the inlet (3), the outlet (2) and the passage (4) are arranged coaxially and co-linearly.

5. Check valve according to one of Claims 1 to 4, **characterized in that** at least one connecting piece (7, 8) has a cylindrical section for receiving a tube connection, and a connecting section (6a, 6b) for connection to another connecting piece (7, 8).

6. Check valve according to one of Claims 1 to 5, **characterized in that** at least one connecting piece (7) has, in the connecting section, a stop (9) for the membrane (5) to bear against.

7. Check valve according to Claim 6, **characterized in that** the stop (9) is designed as an axially extending pin (10).

8. Check valve according to one of Claims 1 to 7, **characterized in that** the membrane (5) is arranged and/or designed in such a manner that it opens up a circular passage (4).

9. Check valve according to one of Claims 1 to 8, **characterized in that** the circular ring (11) acts as a sealing ring.

10. Check valve according to Claim 9, **characterized in that** the circular ring (11) acts as a positioning element.

11. Check valve according to one of Claims 1 to 10, **characterized in that** the circular ring (11) is of X-shaped design in cross section.

12. Check valve according to one of Claims 1 to 10, **characterized in that** the circular ring (11) is of rectangular design in cross section.

13. Check valve according to one of Claims 1 to 10, **characterized in that** the circular ring (11) is designed as an O-ring.

14. Check valve according to one of Claims 1 to 13, **characterized in that** the inner circle (12) is operatively connected to the circular ring (11) by means of tabs.

15. Check valve according to one of Claims 1 to 14, **characterized in that** the thickness of the web (13) is designed in order to set the restoring force of the deflected circle (12).

16. Check valve according to one of Claims 1 to 15, **characterized in that** the membrane (5) is manufactured from fluorosilicone.

17. Check valve according to one of Claims 1 to 16, **characterized in that** the membrane (5) is designed with a fabric reinforcement.

18. Check valve according to one of Claims 1 to 17, **characterized in that** the membrane (5) has a non-stick coating.

19. Check valve according to one of Claims 1 to 18, **characterized in that** the connecting piece (8) is assigned a regenerating valve (14).

20. Check valve according to Claim 19, **characterized in that** the connecting piece (8) is integrated into the regenerating valve (14).

21. Check valve according to Claim 20, **characterized in that** the regenerating valve (14) has a regenerating-valve inlet (15) which can be connected in terms of flow to the inlet (3) by an engine management system.

22. Arrangement with a regenerating valve and a check valve according to one of Claims 1 to 21.

## Revendications

1. Clapet anti-retour, comprenant un corps de base (1) avec une entrée (3) et une sortie (2), qui peuvent être reliées l'une à l'autre en relation d'écoulement par un canal (4), dans lequel une membrane (5) est disposée dans le canal (4) de telle manière qu'elle libère le canal (4) exclusivement dans un sens d'écoulement, dans lequel le corps de base (1) se compose de deux tuyaux (7, 8) de forme complémentaire l'un à l'autre dans la région d'assemblage (6), qui enferment la membrane (5) entre eux comme troisième partie, et dans lequel la membrane (5) comporte un anneau circulaire (11), qui entoure un cercle intérieur (12) qui est relié à l'anneau circulaire (11) par une nervure (13), **caractérisé en ce que** la membrane (5) peut être rabattue de façon asymétrique par une répartition appropriée de l'épaisseur de la nervure (13).

2. Clapet anti-retour selon la revendication 1, **caractérisé en ce que** les tuyaux (7, 8) et la membrane (5) sont assemblés les uns aux autres d'une façon séparable sans destruction.

3. Clapet anti-retour selon la revendication 1, **caractérisé en ce que** les tuyaux (7, 8) et la membrane (5) sont solidement attachés les uns aux autres.

4. Clapet anti-retour selon l'une quelconque des revendications 1 à 3, **caractérisé en ce que** la sortie (2) est associée à un tuyau (7) et l'entrée (3) à l'autre tuyau (8), et l'entrée (3), la sortie (2) et le canal (4) sont disposés de façon coaxiale et colinéaire.

5. Clapet anti-retour selon l'une quelconque des revendications 1 à 4, **caractérisé en ce qu'**au moins un tuyau (7, 8) présente une partie cylindrique destinée à recevoir un raccord pour tuyaux flexibles et une partie d'assemblage (6a, 6b) pour l'assemblage à un autre tuyau (7, 8).

6. Clapet anti-retour selon l'une quelconque des revendications 1 à 5, **caractérisé en ce qu'**au moins un tuyau (7) présente dans la partie d'assemblage une butée (9) permettant d'appuyer la membrane (5).

7. Clapet anti-retour selon la revendication 6, **caractérisé en ce que** la butée (9) se présente sous la forme d'une broche (10) s'étendant axialement.

8. Clapet anti-retour selon l'une quelconque des revendications 1 à 7, **caractérisé en ce que** la membrane (5) est disposée et/ou réalisée de telle manière qu'elle libère un canal circulaire (4).

9. Clapet anti-retour selon l'une quelconque des revendications 1 à 8, **caractérisé en ce que** l'anneau circulaire (11) fait office d'anneau d'étanchéité.

10. Clapet anti-retour selon la revendication 9, **caractérisé en ce que** l'anneau circulaire (11) fait office d'élément de positionnement.

11. Clapet anti-retour selon l'une quelconque des revendications 1 à 10, **caractérisé en ce que** l'anneau circulaire (11) présente une section transversale en forme de X.

12. Clapet anti-retour selon l'une quelconque des revendications 1 à 10, **caractérisé en ce que** l'anneau circulaire (11) présente une section transversale rectangulaire.

13. Clapet anti-retour selon l'une quelconque des revendications 1 à 10, **caractérisé en ce que** l'anneau circulaire (11) est un joint torique.

14. Clapet anti-retour selon l'une quelconque des revendications 1 à 13, **caractérisé en ce que** le cercle intérieur (12) est en liaison active avec l'anneau circulaire (11) par des languettes.

15. Clapet anti-retour selon l'une quelconque des revendications 1 à 14, **caractérisé en ce que** l'épaisseur de la nervure (13) est réalisée de façon à régler la force de rappel du cercle (12) déporté.

16. Clapet anti-retour selon l'une quelconque des revendications 1 à 15, **caractérisé en ce que** la membrane (5) est fabriquée en fluosilicone.

17. Clapet anti-retour selon l'une quelconque des revendications 1 à 16, **caractérisé en ce que** la membrane (5) est réalisée avec un renforcement de tissu.

18. Clapet anti-retour selon l'une quelconque des revendications 1 à 17, **caractérisé en ce que** la membrane (5) présente un revêtement anti-adhérent.

19. Clapet anti-retour selon l'une quelconque des revendications 1 à 18, **caractérisé en ce qu'**une soupape de régénération (14) est associée au tuyau (8).

20. Clapet anti-retour selon la revendication 19, **caractérisé en ce que** le tuyau (8) est intégré dans la soupape de régénération (14).

21. Clapet anti-retour selon la revendication 20, **caractérisé en ce que** la soupape de régénération (14) comporte une entrée de soupape de régénération (15), qui peut être raccordée en relation d'écoulement à l'entrée (3) par une commande à moteur.

22. Dispositif comprenant une soupape de régénération et un clapet anti-retour selon l'une quelconque des revendications 1 à 21.
